# EUROPÄISCHE PATENTSCHRIFT

(11) **EP 4 398 772 B1**
(45) Veröffentlichungstag und Bekanntmachung des Hinweises auf die Patenterteilung: **03.09.2025**
(21) Anmeldenummer: 22738459.1
(22) Anmeldetag: 28.06.2022
(51) Int. Cl.: A47J 31/36

(54) **VERRIEGELBARE BRÜHEINHEIT**
LOCKABLE BREWING UNIT
UNITÉ D'INFUSION VERROUILLABLE

(30) Priorität: 10.09.2021 DE 102021123554
(43) Veröffentlichungstag der Anmeldung: 17.07.2024
(73) Patentinhaber: Eugster/Frismag AG, 8580 Amriswil (CH)
(72) Erfinder: EGGER, Patrick, 9246 Niederbühren (CH); RIESSBECK, Wolfgang, 8597 Landschlacht (CH); SCHEURER, Roman, 8200 Schaffhausen (CH)
(74) Vertreter: Patent- und Rechtsanwälte Behrmann Wagner PartG mbB
(86) Internationale Anmeldenummer: PCT/EP2022/067763
(87) Internationale Veröffentlichungsnummer: WO 2023/036485

(56) Entgegenhaltungen:
- WO-A1-2014/029685
- WO-A1-2018/024799

## Beschreibung

Die Erfindung betrifft eine Brüheinheit für eine Getränkezubereitungsvorrichtung für Substratportionen, insbesondere eine Kaffeemaschine für vorportionierte Kaffeeeinheiten nach dem Oberbegriff des Anspruchs 1.

Aus dem Stand der Technik sind verschiedene Getränkezubereitungsvorrichtungen und diesbezügliche Brüheinheiten bekannt, die dazu dienen eine Substratportion oder eine vorportionierte Kaffeeeinheit, beispielsweise in Kapselform, zu verarbeiten und im Rahmen der Verarbeitung ein Getränk aus dem Substrat der Substratportion zu extrahieren, insbesondere aufzubrühen, wobei regelmäßig ein Brühfluid, beispielsweise heißes Wasser, unter Druck stehend mit dem Substrat und/oder der Substratportion in Verbindung gebracht wird. Die Einwirkung oder das Inverbindungbringen zwischen Substrat und Brühfluid erfolgt in der Regel in einer Brühkammer, die ausreichend abgedichtet ist, um den gewünschten oder notwendigen Überdruck des Brühfluids während des Brühvorgangs und damit den herrschenden Innendruck in der Brühkammer aufzunehmen, ohne dass dabei Brühfluid und/oder aufgebrühtes Getränk an Stellen aus der Brühkammer entweichen, die nicht dem gewünschten und vorgesehenen Getränkeauslass entsprechen.

Um die während des Brühprozesses im Inneren der Brühkammer herrschenden Drücke oder Überdrücke aufnehmen zu können oder überzukompensieren, sind im Stand der Technik verschiedene Ansätze bekannt. Zunächst sind Brüheinheiten mit zwei relativ zueinander bewegbaren Brühkammerhälten oder Brühkammerteile bekannt, wobei eine, bevorzugt bewegliche, Brühkammerhälfte mit einer Kniehebelmechanik bewegt, insbesondere auf die zweite Brühkammerhälfte zu bewegt wird und die Kniehebelmechanik in einem möglichst gestreckten oder gradlinigen Zustand die Brühkammerhälften so aufeinander zu kraftbeaufschlagt oder so aneinander anpresst, dass eine ausreichende Dichtwirkung an Kontaktflächen der Brühkammerhälften, gegebenenfalls unterstützt durch entsprechende Dichteinrichtungen, erreicht wird.

Als Weiterentwicklung zu einer mechanischen Einspannung oder Verspannung der Brühkammerhälften lediglich über eine Antriebseinrichtung, wie beispielsweise die Kniehebelmechanik, ist im Stand der Technik ebenfalls bereits bekannt zusätzlich zu einer Kniehebelmechanik eine separate Verriegelungsmechanik vorzusehen, die die Brühkammerhälften in einer Verschlussstellung verriegelt. Ein solcher Ansatz, der auf die Anmelderin zurückgeht, ist beispielsweise in der DE 10 2012 108 653 A1 beschrieben.

Die separat zu einer Antriebseinrichtung vorgesehene Verriegelungsmechanik ermöglicht zwar grundsätzlich schon eine Entlastung oder weniger hohe Beanspruchung der Antriebseinrichtung während des Brühprozesses, insbesondere während hohe Innendrücke im Inneren der in der Verschlussstellung befindlichen Brühkammer anliegen, gleichzeitig ist jedoch nachteilig an dem bekannten Ansatz, dass die bekannten Verriegelungsmechaniken relativ viel Bauraum benötigen, da sie Verriegelungselemente der Verriegelungsmechanik zentral oder auf halber Höhe einer Brüheinheit vorsehen, in der die Brühkammerhälften eine maximale Breitenerstreckung aufweise, wobei die neben oder außerhalb der Brühkammerhälften zusätzlich noch vorzusehenden Verriegelungselemente an dieser Stelle oder auf dieser Höhe die benötigte Breite oder die notwendige Breite der Brüheinheit noch weiter erhöhen oder vergrößern. Außerdem ist die bekannte Verwendung einer separaten Verriegelungsmechanik mit zentralen Verriegelungselementen in etwa auf der halben Höhe der Brühkammerhälfte nachteilig, weil dadurch im oberen Bereich und im unteren Bereich der Brühkammerhälften Dreh- und Kippmomente durch den Innendruck innerhalb der in der Verschlussstellung befindlichen Brühkammer entstehen oder resultieren können, die von den zentral angeordneten oder auf halber Höhe angeordneten Verriegelungselementen nur schlecht aufgenommen werden können und insbesondere auf Dauer und damit bei einsetzendem Verschleiß oder Abnutzung von Bauteilen doch zu einer Undichtigkeit der Brühkammer während des Brühprozesses führen können.

Die EP 3 493 713 B1 offenbart bereits eine Brüheinheit für Kaffee-Kapseln mit einem Rastmechanismus zum Verrasten bzw. Sichern einer beweglichen Brühkammerhälfte in einer Brühposition. Der Rastmechanismus ist ringförmig ausgebildet und umgreift somit einen Vorsprung der beweglich ausgebildeten Brühkammerhälfte auf dem gesamten Umfang.

Die EP 2 934 243 B1 lehrt eine selbstverriegelnde Brüheinheit für Kaffee-Kapseln. Diese beschreibt in diesem Zusammenhang zwei gegenüberliegende Verriegelungselemente in einer auslassseitigen Brühkammerhälfte, die dazu dienen eine Brühraumgröße an unterschiedliche Kapselgrößen anzupassen. Damit dienen die Verriegelungselemente nicht zur Sicherung der Verschlussstellung der Brühkammerhälften in der Brühposition. Die Offenbarung sieht weiter vor, dass auch mehrere Verriegelungselemente, beispielsweise 3, 4, 6 oder 8 Verriegelungselemente zum Einsatz kommen können, um die Brühraumgröße entsprechend anzupassen.

Die DE 603 03 320 T2 offenbart ebenfalls eine Brüheinheit für Kaffee-Kapseln, welches zwei gegenüberliegende Verriegelungselemente zur Verriegelung der Brühkammerhälfte in einem geschlossenen Zustand ermöglichen.

Aus der WO 2014/029685 A1 ist eine Brühvorrichtung zum Extrahieren einer Portionskapsel mit einer ersten Brühkammerhälfte und einer zweiten Brühkammerhälfte, welche durch eine vom Kniehebelgelenk separaten Verriegelungsvorrichtung im geschlossenen Zustand gehalten werden.

Vor diesem Hintergrund stellt sich die vorliegende Erfindung die Aufgabe, eine Brüheinheit vorzuschlagen, die die Nachteile im Stand der Technik überwindet und insbesondere eine platz- und/oder bauraumsparende und gleichzeitig dauerhaft sichere und zuverlässige Verriegelung der Brühkammerhälften in der Verschlussstellung ermöglicht.

Die vorangehend genannte Aufgabe wird mit einer Brüheinheit mit den Merkmalen des Anspruchs 1 gelöst.

Vorteilhafte Ausführungsformen der Brüheinheit sind Gegenstand der nachfolgenden Beschreibung, Figurenbeschreibung, der Figuren sowie der Unteransprüche.

Die Brüheinheit für eine Getränkezubereitungsvorrichtung für Substratportionen, insbesondere für eine Kaffeemaschine für vorportionierte Kaffeeeinheiten, umfasst dabei in an sich bekannter Art und Weise einen Träger und eine Brühkammer, die wenigstens zwei relativ zueinander in einer ersten Richtung bewegbare Brühkammerhälften aufweist. Ferner umfasst die Brüheinheit in gattungsgemäßer Ausgestaltung eine Antriebseinrichtung, mit der wenigstens eine Brühkammerhälfte relativ zum Träger und/oder zur wenigstens zweiten Brühkammerhälfte bewegbar ist, sodass die Brühkammerhälften wenigstens in eine Öffnungsstellung und eine Verschlussstellung überführbar sind. Weiterhin in bekannter Art und Weise umfasst die Brüheinheit eine separate Verriegelungsmechanik zum Verriegeln der Brühkammer in der Verschlussstellung.

Erfindungsgemäß ist weiter vorgesehen, dass die Verriegelungsmechanik vier Verriegelungselemente umfasst.

Durch die Realisierung von vier Verriegelungselementen wird grundsätzlich gewährleistet, dass die Verriegelungselemente nicht eine Verriegelungsachse oder eine Verriegelungslinie, beispielsweise auf etwa halber Höhe der Brühkammerhälften in Breitenrichtung und damit senkrecht zur ersten Richtung, definieren, sondern dass die insgesamt vier Verriegelungselemente zwangsläufig eine Verriegelungsebene aufspannen, was dann wiederum dazu führt, dass Dreh- und Kippmomente, die insbesondere in den Randbereichen der Brühkammerhälften durch den Überdruck im Inneren der Brühkammer erzeugt werden können, besser aufgenommen und abgeleitet werden können, als bei Verriegelungselementen, die lediglich eine Verriegelungslinie oder Verriegelungsachse, beispielsweise etwa auf halber Höhe und halber Höhenrichtung, ausbilden.

Außerdem wird bei der erfindungsgemäßen Realisierung von vier Verriegelungselementen zwangsläufig oder zumindest fast zwangsläufig eine exzentrische Anordnung der Verriegelungselemente realisiert, sodass dann die Verriegelungselemente in Bereichen angeordnet sind oder angeordnet werden, in denen die Brühkammerhälften gerade nicht ihre maximale Höhen- oder Breitenerstreckung aufweisen, sodass die Verriegelungselemente nicht grundsätzlich den Bauraum oder das Volumen der Brüheinheit vergrößern, sondern zumindest teilweise Bauraum genutzt werden kann, der aufgrund der Ausdehnungen der Brühkammerhälften, beispielsweise im Bereich ihrer maximalen Höhe und Breite, sowieso zur Verfügung stehen muss.

Die Grundidee der vorliegenden Erfindung basiert also auf der Erkenntnis, dass eine exzentrisch, bevorzugt abseits der Mittelsymmetrieebenen (horizontale und vertikale) angeordnete Mehrzahl von Verriegelungselementen, nämlich vier Verriegelungselementen, eine gleichzeitig platzsparende und sichere Verriegelung der Brühkammer oder Brühkammerhälften in der Verschlussstellung ermöglicht.

Gemäß einer ersten, besonders vorteilhaften Ausführungsform kann vorgesehen sein, dass die Verriegelungselemente eine Ebene senkrecht zu der ersten Richtung aufspannen. Dies bedeutet, dass die Verriegelungselemente entweder grundsätzlich oder zumindest in der Verschlussstellung der Brühkammerhälften alle auf der gleichen Höhe oder Position im Bezug auf die erste Richtung angeordnet sind und somit eine Ebene aufspannen, die rechtwinklig auf der ersten Richtung steht. Dadurch wird in besonders vorteilhafter Weise erreicht, dass der Innendruck der Brühkammer gleichmäßig und gerade auch an den Rändern der Brühkammerhälften gut und gleichmäßig durch die Verriegelungselemente aufgenommen und abgeleitet werden kann, wobei gleichzeitig Kipp- und Drehmomente klein oder minimal gehalten werden.

Weiterhin kann vorteilhaftvorgesehen sein, dass der Träger Rastausnehmungen oder Rastvertiefungen aufweist, in die die Verriegelungselemente in einer Verriegelungsstellung eingreifen, wobei die Rastausnehmungen oder Rastvertiefungen in horizontal verlaufenden Flächen des Trägers ausgebildet sind. Besonders bevorzugt können die Rastausnehmungen oder Rastvertiefungen in Deckel- oder Bodenabschnitten des Trägers ausgebildet oder eingeformt sein. Dadurch kann eine Platzersparnis, insbesondere in der Breitenrichtung der Brüheinheit erreicht werden. Nachfolgende sollen ohne Beschränkung der technischen Bedeutung, sondern nur zur verkürzen Benennung die Rausausnehmungen oder Rastvertiefungen nur noch als Rastausnehmungen bezeichnet werden. Es können aber grundsätzlich sowohl Vertiefungen vorgesehen sein, die dann die Fläche oder die Wandung in der sie gebildet sind, nicht vollständig durchsetzen, als auch Ausnehmungen, die dann die Fläche oder Wandung in denen sie angeordnet sind, vollständig durchbrechen.

An dieser Stelle sei erwähnt, dass Begriffe wie oben, unten, seitlich in Bezug auf die vorliegende Brüheinheit und deren Bestandteile im Wesentlichen anhand einer Einführ- oder Einwurföffnung der Brüheinheit für Getränkesubstrate definiert werden soll. Diese Einführöffnung wird nach oben ausgerichtet oder durch eine obere Seite oder Fläche der Brüheinheit verlaufen. Die gegenüberliegende Seite oder Fläche der Brüheinheit, die dann in der Regel aber nicht zwangsläufig einen Auslass oder Auswurf für benutzte Substratportionen aufweist, soll als Unterseite oder allgemein im Bezug auf eine Richtung als "unten" verstanden werden. Zwischen der Oberseite und der Unterseite oder dem oberen Ende und dem unteren Ende der Brüheinheit sollen dann die Seiten verlaufen, die dann in der Breitenrichtung voneinander beabstandet sind. Im Gegensatz dazu wird die Höhenrichtung zwischen Oberseite und Unterseite definiert oder festgelegt. Jeweils senkrecht auf der Breitenrichtung und der Höhenrichtung steht die erste Richtung, in der die Brühkammerhälften relativ zueinander bewegt werden, um die Brühkammerhälften in die Verschlussstellung und Öffnungsstellung zu überführen.

Gemäß einer weiteren vorteilhaften Ausführungsform kann vorgesehen sein, dass die Rastausnehmungen in einer senkrecht zur ersten Richtung verlaufenden Breitenrichtung der Brüheinheit im Randbereich des Trägers, bevorzugt angrenzend an eine Seitenwandung des Trägers angeordnet sind. Damit wird eine fast maximale Exzentrizität der vier Verriegelungselemente im Bezug auf die Mittelsymmetrieflächen der Brühkammerhälften - also horizontale und vertikale Ebenen parallel zur ersten Richtung und durch den Mittelpunkt oder eine Mittelsymmetrieachse der Brühkammerhälften verlaufend - gebildet. Die randseitige oder fast maximal randseitige Anordnung der Rastausnehmungen in dem Träger, bevorzugt in oberen und unteren Deckel- und Bodenflächen des Trägers, führt insgesamt zu einer Platzersparnis und verhindert darüber hinaus in besonders vorteilhafter Weise resultierende Kipp- und/oder Drehmomente der Brühkammerhälften in der Verschlussstellung der Brühkammer. Durch die entsprechende Anordnung der Rastausnehmungen wird auch die Anordnung der Verriegelungselemente mitbestimmt, da diese in Verriegelungsstellung in diese eingreifen sollen. Durch die randseitige Anordnung der Rastausnehmungen wird eine seitliche und/oder auch randseitige Anordnung der Verriegelungselemente vorteilhaft bevorzugt, was wiederum die Platzersparnis und die verbesserte Kraftaufnahme unterstützt.

Weiterhin kann in einer vorteilhaften Ausführungsform der Brüheinheit vorgesehen sein, dass die Verriegelungselemente zum Erreichen der Verschlussstellung der Brühkammer oder Brühkammerhälften paarweise von innen nach oben und unten in die Rastausnehmungen eingreifen. Dadurch kann bevorzugt eine sichere und gleichmäßige Verriegelung der Brühkammerhälfte in der Verschlussstellung erreicht werden. Ferner wird durch das paarweise von innen nach oben und nach unten ausgeführte Eingreifen der Verriegelungselemente eine innenseitige oder innenliegende Anordnung der Verriegelungselemente erreicht oder sogar bedingt, die zu einer platzsparenden Ausgestaltung der Brüheinheit führen. Alternativ können die Verriegelungselemente auch um 90° gedreht oder rotiert angeordnet sein. Dann könnten die Verriegelungselemente zum Erreichen der Verschlussstellung der Brühkammer oder Brühkammerhälften paarweise von innen nach rechts und links in die Rastausnehmungen eingreifen. In diesem Fall wären die Rastausnehmungen bevorzugt in an den Deckel- und Bodenflächen des Trägers angrenzenden Seitenflächen ausgebildet.

Ebenfalls kann in einer vorteilhaften Ausführungsform der Brüheinheit vorgesehen sein, dass die Verriegelungselemente so mit der beweglichen Brühkammerhälfte verbunden sind, dass eine Bewegung der Brühkammerhälfte in der ersten Richtung eine entsprechende Bewegung der Verriegelungselemente, insbesondere in translatorischer Hinsicht, bewirkt.

Besonders vorteilhaft kann zudem vorgesehen sein, dass die Verriegelungselemente über jeweils sich in Breitenrichtung erstreckende Achszapfen schwenkbar mit einer gegenüber dem Träger beweglich ausgebildeten Brühkammerhälfte verbunden sind. Dadurch wird erreicht, dass die Verriegelungselemente rotiert oder verschwenkt werden können, sodass gerade der Übergang zwischen der Freigabestellung und einer Verriegelungsstellung der Verriegelungselemente über ein Verschwenken oder Rotieren der Verriegelungselemente um die besagten Achszapfen erreicht wird. Gegebenenfalls kann vorteilhaft die Verschwenkung abschnittsweise oder zeitweise mit einer Translationsbewegung der Verriegelungselemente in der ersten Richtung über eine Verbindung zur beweglichen Brühkammerhälfte überlagert werden.

Erfindungsgemäß ist vorgesehen, dass die Verriegelungselemente paarweise über zwischen Paaren von oder zwischen jeweils zwei Verriegelungselementen bewegbare oder bewegbar angeordnete Steuerschieber zwischen einer Verriegelungsstellung und einer Freigabestellung bewegt, insbesondere verschwenkt werden können. Die Steuerschieber bewegen oder steuern bevorzugt gleichzeitig und/oder paarweise zwei Verriegelungselemente, sodass insbesondere nur zwei Steuerschieber für die insgesamt vier Verriegelungselemente benötigt werden und von der Brüheinheit umfasst sind.

Besonders bevorzugt, insbesondere bei einer randseitigen Ausbildung und Anordnung der Verriegelungselemente kann vorgesehen sein, dass die Steuerschieber zwischen in ein Gehäuse der beweglich gegenüber dem Träger gelagerten oder angeordneten Brühkammerhälfte integriert sind. In diesem Fall wird nicht nur eine platzsparende Realisierung erreicht, sondern auch ermöglicht, dass die Steuerschieber in einer Ebene angeordnet und in einer Ebene bewegbar sind, die durch die zwei zu steuernden Verriegelungselemente gebildet oder definiert wird. Dadurch kann eine direkte und insbesondere versatzfreie Übertragung von Steuerkräften der Steuerschieber auf die Verriegelungselemente erreicht werden.

Weiterbildend kann vorgesehen sein, dass die Steuerschieber in der ersten Richtung beweglich gegenüber der beweglich gegenüber dem Träger gelagerten Brühkammerhälfte ausgebildet sind und bevorzugt auch beweglich gegenüber dem Träger selbst ausgebildet sind. Dies bedeutet, dass je nach Bewegung der Brüheinheit, insbesondere der beweglichen Brühkammerhälfte die Steuerschieber sich gegenüber der Brühkammerhälfte in der ersten Richtung bewegen oder verschieben können, bevorzugt bis der Steuerschieber an mechanischen Anschlägen, wie beispielsweise den Verriegelungselementen, zur Anlage kommt. Weiterhin können die Steuerschieber jedoch abhängig von der Bewegung der Brüheinheit auch nur gegenüber dem Träger beweglich sein, beispielsweise wenn eine Zwangsführung mit der Brühkammerhälfte, beispielsweise verursacht über Anschläge vorliegt. Schließlich kann auch vorgesehen sein, dass die Steuerschieber sich, bevorzugt in einer entsprechenden Freigabestellung oder einem entsprechenden Freigabebereich sowohl gegenüber dem Träger als auch gegenüber der Brühkammerhälfte bewegen oder bewegen können.

Erfindungsgemäß sind die Steuerschieber als Steuerplatten ausgebildet, deren Grundfläche parallel zu Seitenwandungen des Trägers verlaufen. Durch die Ausführung als Steuerplatten kann besonders vorteilhaft eine paarweise und gleichzeitige Ansteuerung von Verriegelungselementen bei gleichzeitig geringem Platzbedarf erreicht werden.

Gemäβ der Erfindung ist zudem vorgesehen, dass die Steuerschieber als plan-konkave Steuerplatten ausgebildet sind, mit einer äußeren planen Grundfläche, die parallel zu Seitenwandungen des Trägers angeordnet ist und einer gegenüberliegenden, inneren konkaven Grundfläche, die beweglich gegenüber einer konvexen Oberfläche eines Gehäuses einer Brühkammerhälfte angeordnet ist. Durch die plan-konkave Ausbildung der Steuerschieber kann in besonders vorteilhafter Weise eine Platzersparnis realisiert werden, da dann der Steuerschieber oder die Steuerplatten nicht in Breitenrichtung neben der beweglichen Brühkammerhälfte angeordnet werden muss, sondern stattdessen in Breitenrichtung teilweise überlappend mit der Brühkammerhälfte ausgebildet sein kann.

In einer besonders vorteilhaften Weiterbildung kann vorgesehen sein, dass eine innere Grundfläche der Steuerplatte, bevorzugt die konkave Grundfläche der Steuerplatte eine Nut entlang der ersten Richtung aufweist, die mit einem Führungssteg auf einer Oberfläche, bevorzugt einerkonvexen Oberfläche, eines Gehäuses der beweglichen Brühkammerhälfte im Eingriff steht. Dadurch wird in vorteilhafter Weise die Führung der Steuerschieber oder Steuerplatten entlang der ersten Richtung unterstützt und gleichzeitig die Bewegung gegenüber der Brühkammerhälfte ermöglicht.

Weiterhin kann vorteilhaft vorgesehen sein, dass die Steuerplatten einen in der ersten Richtung verlaufenden Führungsdorn aufweisen, der beim Überführen der Verriegelungselemente in die Verriegelungsstellung in eine gefederte Aufnahme der Brühkammerhälfte eingeführt wird. Dadurch wird in vorteilhafter Weise die Entriegelung der Brühkammerhälften und/oder eine zusätzlich zu den Verriegelungselementen wirkende dynamisch eingebrachte oder hergestellte Anpresswirkung der Brühkammerhälften aneinander erleichtert und ermöglicht.

Außerdem kann in einer weiteren, besonders bevorzugten Ausgestaltung der Brüheinheit vorgesehen sein, dass die Steuerschieber, insbesondere Steuerplatten über außenliegende, insbesondere in Breitenrichtung außenliegend, Antriebsbolzen mit der Antriebseinrichtung verbunden sind. Durch die außenliegenden Antriebsbolzen wird ermöglicht, dass auch die Antriebseinrichtung teilweise oder vollständig außerhalb des Trägers angeordnet ist und die Antriebsenergie seitlich von außen nur oder auch über die Antriebsbolzen in die Brüheinheit, insbesondere auf die bewegliche Brühkammerhälfte einbringt oder aufbringt. Dies führt zu einer zusätzlichen Ersparnis an Bauraum oder Bauvolumen.

Weiterbildend kann auch vorgesehen sein, dass die Antriebsbolzen sich auf beiden Seiten der Brüheinheit durch Ausnehmungen in dem Träger erstrecken. Als Ausnehmungen können beispielsweise Langlöcher oder vergleichbare Ausnehmungen vorgesehen sein. Die Ausnehmungen ermöglichen in besonders effektiver Weise die Durchführung der Antriebsbolzen und somit eine außenliegende Antriebseinrichtung, die über die Antriebsbolzen und die Steuerschieber, insbesondere Steuerplatten, die Antriebsenergie auf die bewegliche Brühkammerhälfte überträgt.

Dementsprechend kann in einer vorteilhaften Ausführungsform vorgesehen sein, dass die Antriebsbolzen mit einer außerhalb des Trägers angeordneten Antriebsgabel der Antriebseinrichtung, insbesondere mit beidseitig an Seitenwandungen des Trägers entlang bewegbaren Gabelbeinen, verbunden sind. Dabei muss die Verbindung mit den Gabelbeinen nicht zwangsläufig direkt oder unmittelbar erfolgen. Vielmehr kann es vorteilhaft sein, wenn die Anbindung oder Verbindung mit den Gabelbeinen indirekt, bevorzugt über ein an den Gabelbeinen angeordnetes Gelenk oder eine mit den Gabelbeinen verbundene Rotationsachse indirekt erfolgt. Die Verwendung einer Antriebsgabel mit zwei, auf den Seiten der Brüheinheit angeordneten und entlang von Seitenwandungen des Trägers bewegbaren Gabelbeinen ermöglicht in besonders vorteilhafter Weise die gleichmäßige und synchrone Ansteuerung der Steuerschieber, insbesondere Steuerplatten von außen auf beiden Seiten des Trägers.

Besonders vorteilhaft kann vorgesehen sein, dass die Antriebsgabel eine die Gabelbeine verbindende Rotationsachse umfasst, die drehbar an dem Träger angeordnet ist und bevorzugt mit Vorspannmitteln in eine Rotationsrichtung vorgespannt ist. Dadurch wird ermöglicht eine- in Bezug auf eine Kniehebelmechanik - verhältnismäßig einfach ausgebildete Antriebseinrichtung zu realisieren, die im Wesentlichen auf der Rotation der Rotationsachse basiert, wobei die Rotation der Rotationsachse über die Gabelbeine weitergegeben wird und unmittelbar, besonders bevorzugt aber mittelbar, über die Gabelbeine dann in eine Linearbewegung der beweglichen Brühkammerhälfte, bevorzugt über die mit den Gabelbeinen verbundenen Antriebszapfen sowie die Steuerschieber oder Steuerplatten überführt wird.

Weiterhin wird die im Betreff genannte Aufgabe durch eine Getränkezubereitungsvorrichtung für Substratportionen, insbesondere eine Kaffeemaschine für vorportionierte Kaffeeeinheiten mit einer Brüheinheit nach einer der vorangehend beschriebenen Ausführungsformen gelöst.

Vorteile und vorteilhafte Ausführungsformen der erfindungsgemäßen Brüheinheit werden nachfolgend anhand der lediglich beispielhaften, schematischen Zeichnungen erläutert.

Darin zeigen:
- Fig. 1:: eine perspektivische Ansicht einer Brühkammerhälfte samt Verriegelungselementen;
- Fig. 2:: eine perspektivische Schnittdarstellung von Teilen einer Brüheinheit in einer Verschlussstellung der Brühkammerhälften;
- Fig. 3:: eine perspektivische Ansicht von Teilen einer erfindungsgemäßen Brüheinheit in einer Verschlussstellung der Brühkammerhälften;
- Fig. 4:: eine Schnitt-Seitenansicht einer erfindungsgemäßen Brüheinheit in einer Verschlussstellung der Brühkammerhälften;
- Fig. 5:: eine Schnitt-Draufsicht auf eine Brüheinheit in einer Verschlussstellung der Brühkammerhälften.

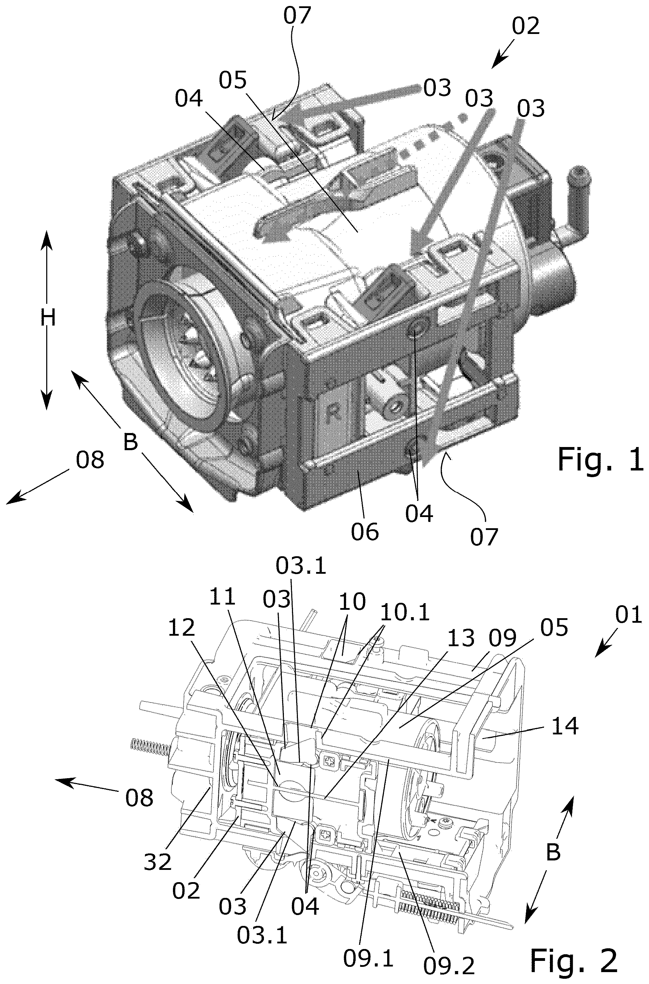

Fig. 1 zeigt eine Brühkammerhälfte 02, die beweglich in einem nicht dargestellten Träger einer Brüheinheit angeordnet werden kann. Die Brühkammerhälfte 02 umfasst vier Verriegelungselemente 03, von denen insgesamt drei Verriegelungselemente 03 in der perspektivischen Ansicht der Fig. 1 erkennbar sind. Die Verriegelungselemente 03 sind an der Brühkammerhälfte 02 angeordnet und befestigt, wobei die Verriegelungselemente 03 über beidseitige Achszapfen 04 sowohl mit einem ansatzweise zylindrischen Innengehäuse 05 als auch mit einem käfigartigen Außengehäuse 06 der Brühkammerhälfte 02 verbunden sind. Die Verriegelungselemente 03 lassen sich um die Achszapfen 04 in eine Freigabestellung und in eine Verriegelungsstellung rotieren. **In** der Darstellung der Fig. 1 befinden sich die Verriegelungselemente 03 in der Verriegelungsstellung. Die Überführung zwischen der Freigabe und der Verriegelungsstellung der Verriegelungselemente 03 wird über Steuerschieber, insbesondere Steuerplatten auf beiden Seiten der Brühkammerhälfte 02 realisiert, die in der Darstellung der Fig. 1 nicht im Detail erkennbar sind. In Bezug auf die Steuerschieber, insbesondere Steuerplatten, wird auf die nachfolgenden Darstellungen verwiesen.

Erkennbar ist jedoch, dass in der Höhenrichtung H zwischen den Verriegelungselementen 03 seitlich eine Aufnahme 06 für einen Antriebsbolzen vorgesehen ist. Die Aufnahme 06 kann mit dem Steuerschieber oder der Steuerplatte verbunden sein. Über die Aufnahme kann ein nicht dargestellter Antriebsbolzen seitlich durch Ausnehmungen in einen nicht dargestellten Träger geführt werden und dort außerhalb des Trägers mit Elementen einer Antriebseinrichtung verbunden oder verknüpft werden.

Die Verriegelungselemente 03 greifen, wie anhand der Achszapfen 04 erkennbar ist paarweise von innen nach oben und nach unten in entsprechende Rastausnehmungen im Träger ein. Die Verriegelungselemente 03 sind dabei an einer Oberseite oder einer Unterseite der Brühkammerhälfte 02 jeweils seitlich oder randseitig angeordnet. Dadurch kann besonders vorteilhaft eine gleichmäßige Kraftaufnahme oder Krafteinleitung erfolgen. Weiterhin sind, wie in der Darstellung der Fig. 1 bereits erkennbar die Verriegelungselemente 03 so angeordnet, dass diese, beispielsweise über die rückseitigen Riegelflächen 07 definiert, eine Ebene aufspannen, die senkrecht zur ersten Richtung 08 verläuft, in der die Brühkammerhälfte 02 in dem nicht dargestellten Träger bewegt, insbesondere verschoben wird.

Die Fig. 2 zeigt eine perspektivische Ansicht der Brühkammerhälfte 02 nun aber in einer Darstellung, in der die Brühkammerhälfte 02 in einem entsprechenden Träger 09 aufgenommen ist. Die Fig. 2 zeigt einen Schnitt durch einen Randbereich des Trägers 09, sodass in der Schnittfläche sowohl die Rastausnehmungen 10 als auch die darin eingreifenden Verriegelungselemente 03 und die die Verriegelungselemente 03 steuernden Steuerschieber in Form von Steuerplatten 11 dargestellt sind. Die ,Rastausnehmungen 10 sind randseitig in horizontal verlaufenden Flächen oder Wandungen, insbesondere oberen und unteren Gehäusewänden 09.1, 09.2 angeordnet.

Die Steuerplatte 11 weist eine Nut 12 entlang der ersten Richtung 08 auf, die mit einem Führungssteg 13 auf der Oberfläche des Innengehäuses 05 der Brühkammerhälfte 02 im Eingriff steht. Die Steuerplatte ist nicht, wie eventuell vermutet werden könnte zweiteilig sondern einteilig ausgebildet. Die Unterbrechung auf Höhe der Nut ist der Wahl der Schnittfläche geschuldet. Tatsächlich erstreckt sich die Nut in Breitenrichtung B nur über einen Teil der Stärke oder Dicke der ansonsten einteiligen Steuerplatte 11.

Im Schnitt der Fig. 2 ist im Gegensatz zu Fig. 1 nicht mehr die an der Steuerplatte 11 seitlich angebrachte oder seitlich vorstehende Aufnahme 06 zur Befestigung oder Aufnahme eines Antriebsbolzens zu erkennen oder dargestellt. Insgesamt ist jedoch erkennbar, dass die Steuerplatte 11 entlang des Führungsstegs 13 bewegbar angeordnet ist. Damit ist die Steuerplatte 11 sowohl gegenüber der ersten Brühkammerhälfte 02 und damit auch gegenüber den Verriegelungselementen 03 beweglich ausgeführt als auch gegenüber dem Träger 09 beweglich ausgeführt. Die nicht dargestellte Aufnahme 06 wird durch Ausnehmungen 14, bevorzugt in der Form eines Langlochs, durch den Träger 09, insbesondere seitlich durch den Träger 09 nach außen geführt. Mit anderen Worten ausgedrückt bedeutet dies, dass der Antriebsbolzen durch die Ausnehmung 14 im Träger 09 von außen nach innen mit der Steuerplatte 11 verbunden oder verknüpft werden und somit die Steuerplatten 11 über außenliegende, insbesondere in Breitenrichtung B außenliegende Antriebsbolzen mit einer Antriebseinrichtung verbunden sind.

Die Fig. 2 verdeutlicht den Verriegelungsmechanismus oder die Verriegelungsmechanik der Brüheinheit 01. Solange die bewegliche Brühkammerhälfte 02 nicht die in der Fig. 2 dargestellte Position erreicht hat, in der die Brühkammerhälften 02, 32 in der Verschlussposition angeordnet sind und die Verriegelungselemente 03 die Verriegelungsstellung eingenommen haben, befindet sich die Steuerplatte 11 entlang dem Führungssteg 13 im hinteren Bereich. In diesem Zustand, insbesondere solange die Verriegelungselemente 03 noch nicht in die Rastausnehmungen 10 eingreifen, sind die Verriegelungselemente 03 nach innen um die Achszapfen 04 verschwenkt und durch die obere Gehäusewand 09.1 bzw. die gegenüberliegende untere Gehäusewand 09.2 auch gegen eine Rotation gehemmt oder gesichert, sodass die lange Seite 03.1 des Verriegelungselements 03 jeweils einen Anschlag für die Steuerplatte 11 ausbildet und bei einem Antrieb der Steuerplatten 11, bevorzugt über einem seitlich von außen kontaktierten Antriebszapfen, wird die Steuerplatte 11 gegen die nach innen rotierten Verriegelungselemente 03, insbesondere die lange Seite 03.1 der Verriegelungselemente 03 kraftbeaufschlagt und führt zu einer Verschiebung der Brühkammerhälfte 02 entlang der ersten Richtung 08, wobei die Verriegelungselemente 03 als Anschlag für die beidseitigen Steuerschieber, insbesondere Steuerplatten 11 dienen.

Kurz vor oder beim Erreichen der Position oder Anordnung der Brühkammerhälfte 02, wie sie in der Fig. 2 dargestellt ist, geben die rückseitigen Enden 10.1 der Rastausnehmungen 10 die Rotation der Verriegelungselemente 03 um die Achszapfen 04 frei, sodass dann die Steuerplatte 11 sowohl an den langen Seiten 03.1 der Verriegelungselemente 03 abgleiten kann, dabei jedoch gleichzeitig die Bewegung der Brühkammerhälfte 02 zur Erreichung der Verschlussposition vollendet und gleichzeitig die Verriegelung sicherstellt bzw. die Verriegelungsstellung der Verriegelungselemente 03 sichert. Denn im Zustand, wie er in der Fig. 2 dargestellt ist, sind die Verriegelungselemente 03 so verkeilt oder gehemmt, dass die Brühkammerhälfte 02 in der dargestellten Position gehalten und gleichzeitig die Verriegelungselemente 03 in ihrer Position, insbesondere in der Verriegelungsstellung gesichert werden.

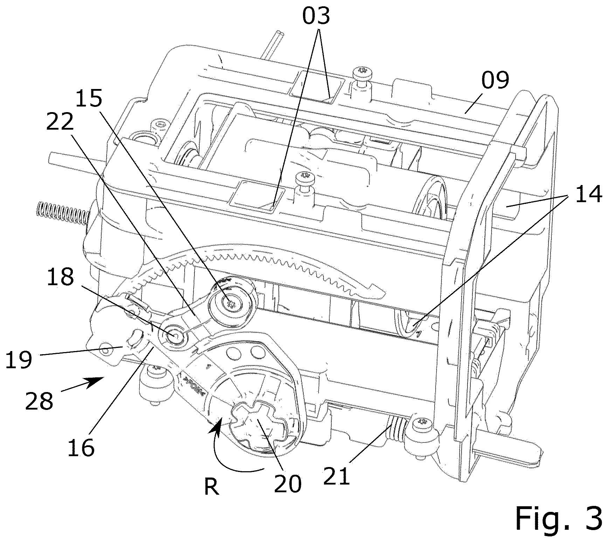

Fig. 3 zeigt eine perspektivische Darstellung, die im Wesentlichen der Darstellung der Fig. 2 entspricht, wobei jedoch der Schnitt durch die Brüheinheit 01 entfernt wurde. Damit wird der Antriebsbolzen 15 sichtbar, der in die Ausnehmung 06 eingreift, die wiederum die Steuerplatte 11 mit dem Antriebsbolzen 15 verbindet. Der Antriebsbolzen 15 ist mit einer außerhalb des Trägers 09 Antriebseinrichtung 28 verbunden. Die Antriebseinrichtung umfasst dabei die auf der Außenseite des Trägers 09 angeordnete Antriebsgabel 16, mit der der Antriebsbolzen 15 mittelbar über ein Gelenk 18 verbunden ist. Die Antriebsgabel 16 weist neben den Gabelbeinen 19 eine die Gabelbeine 19 verbindende Rotationsachse 20 auf, die drehbar am Träger 09 angeordnet ist und mit Vorspannmitteln 21 in eine Rotationsrichtung R vorgespannt ist, die in der Darstellung der Fig. 3 im Uhrzeigersinn verläuft. Die Vorspannmittel 21 ermöglichen eine automatische Öffnung der Brühkammerhälften 02, 32 und/oder eine automatische Entriegelung der Verriegelungselemente 03. Die an den Gabelbeinen 19 über das Gelenk 18 angelenkten Schenkel 22 ermöglichen es die Kreisbewegung des Gelenks 18 um die Rotationsachse 20 in eine Linearbewegung des Antriebszapfens 15, insbesondere entlang der Ausnehmung 14 im Träger 09 zu überführen.

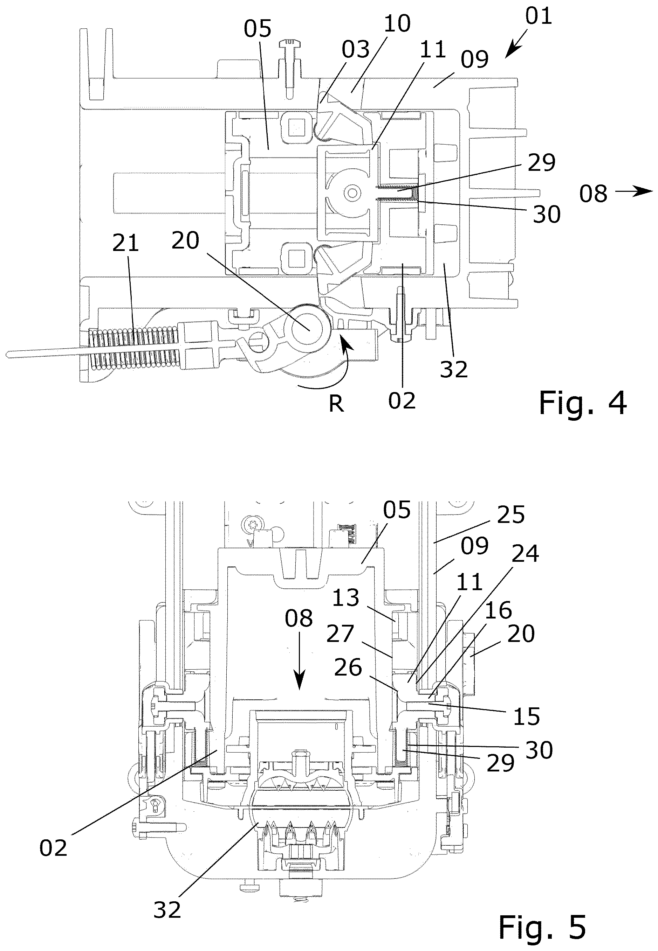

In der Fig. 4, die eine weitere Schnittdarstellung einer Seitenansicht eines Teils der Brüheinheit 01 darstellt, ist erneut in der Verschlussstellung der Brühkammerhälften 02, 32 dargestellt, wie die Steuerplatte 11, die Verriegelungselemente 03 und die Rastausnehmungen 10 zusammenwirken. Gleichzeitig zu erkennen ist auch die, die Gabelbeine 19 verbindende Rotationsachse 20, die mit den Vorspannmitteln 21 in dieser Darstellung zu einer Rotation R gegen den Uhrzeigersinn vorgespannt ist. Erkennbar ist auch, dass die Steuerplatten 11 einen in der ersten Richtung 08 verlaufenden Führungsdorn 29 aufweisen, der beim Überführen der Verriegelungselemente 03 in die dargestellte Verriegelungsstellung in eine gefederte Aufnahme 30 der Brühkammerhälfte 02 eingeführt wird.

Der Schnitt der Fig. 5 verläuft durch eine Draufsicht auf einen Teil der Brüheinheit 01 in der Verschlussstellung und/oder Verriegelungsstellung. Der Schnitt verläuft auf der Höhe der Ausnehmungen 14 des Trägers 09 und/oder auf der Höhe der Antriebsbolzen 15. Dementsprechend ist in dieser Ansicht nochmals erkennbar, die Verbindung zwischen dem Antriebsbolzen 15 und der Aufnahme 16, die in die Steuerplatte 11 übergeht sowie den in der ersten Richtung verlaufenden oder überstehenden Führungsdorn 29 und dessen Aufnahme 30 in der zweiten Brühkammerhälfte 02.

Weiterhin ist auch erkennbar, dass der Antriebsbolzen 15 über den Arm 28 an dem Gelenk 18 mit dem Gabelbein 19 verbunden ist, welches wiederum mit dem gegenüberliegenden Gabelbein 19 über die Rotationsachse 20 verbunden ist. Außerdem ist erkennbar, dass die Steuerplatte 11 eine plane äußere Grundfläche 24 aufweist, die im Wesentlichen parallel zu einer Seitenwandung 25 des Trägers 09 verläuft. Weiterhin ist erkennbar, dass die Steuerplatte 11 mit einer gegenüberliegenden, inneren, konkaven Grundfläche 26 an einer konvexen Oberfläche 27 eines Innengehäuses 05 der Brühkammerhälfte 02 zur Anlage kommt. Ebenfalls zur erkennen ist der Führungssteg 13, der sich entlang der ersten Richtung 08 auf dem Innengehäuse 05 der Brühkammerhälfte 02 erstreckt.

### Bezugszeichen

- 01: Brüheinheit
- 02: Brühkammerhälfte
- 03: Verriegelungselemente
- 03.1: lange Seite
- 04: Achszapfen
- 05: Innengehäuse
- 06: Aufnahme
- 07: Riegelflächen
- 08: erste Richtung
- 09: Träger
- 09.1: obere Gehäusewand
- 09.2: untere Gehäusewand
- 10: Rastausnehmungen
- 10.1: rückseitigen Enden
- 11: Steuerplatte
- 12: Nut
- 13: Führungssteg
- 14: Ausnehmungen
- 15: Antriebsbolzen
- 16: Antriebsgabel
- 18: Gelenk
- 19: Gabelbeine
- 20: Rotationsachse
- 21: Vorspannmittel
- 22: Schenkel
- 24: Grundfläche
- 25: Seitenwandung
- 26: konkave Grundfläche
- 27: konvexe Oberfläche
- 28: Antriebseinrichtung
- 29: Führungsdorn
- 30: Aufnahme
- 32: Brühkammerhälfte

- B: Breitenrichtung
- H: Höhenrichtung
- R: Rotationsrichtung

## Patentansprüche

1. Brüheinheit (01) für eine Getränkezubereitungsvorrichtung für Substratportionen, insbesondere für eine Kaffeemaschine für vorportionierte Kaffeeeinheiten, umfassend einen Träger (09) und eine Brühkammer, die wenigstens zwei relativ zueinander in einer ersten Richtung (08) bewegbare Brühkammerhälften (02, 32) aufweist, und eine Antriebseinrichtung (28) umfasst, mit der wenigstens eine Brühkammerhälfte (02) relativ zum Träger (09) bewegbar ist, so dass die Brühkammerhälften (02, 32) wenigsten in eine Öffnungsstellung und eine Verschlussstellung überführbar sind, und eine separate Verriegelungsmechanik zum Verriegeln der Brühkammerhälften (02, 32) in einer Verschlussstellung, wobei die Verriegelungsmechanik vier Verriegelungselemente (03) umfasst,
wobei die Verriegelungselemente (03) paarweise über zwischen jeweils zwei Verriegelungselementen (03) angeordnete, bewegbare Steuerschieber zwischen einer Verriegelungsstellung und einer Freigabestellung bewegt, insbesondere verschwenkt, werden können,
**dadurch gekennzeichnet,**
**dass** die Steuerschieber als plan-konkave Steuerplatten (11) ausgebildet sind, mit einer äußeren, planen Grundfläche (24), die parallel zu Seitenwandungen (25) des Trägers (09) angeordnet ist und mit einer gegenüberliegender, inneren, konkaven Grundfläche (26), die beweglich gegenüber einer konvexen Oberfläche (27) eines Innengehäuses (05) einer Brühkammerhälfte (02) angeordnet ist.

2. Brüheinheit nach Anspruch 1,
**dadurch gekennzeichnet,**
**dass** die Verriegelungselemente (03) eine Ebene senkrecht zur ersten Richtung (08) aufspannen.

3. Brüheinheit nach Anspruch 1 oder 2,
**dadurch gekennzeichnet,**
**dass** der Träger (09) Rastausnehmungen (10) oder Rastvertiefungen aufweist, die in horizontal verlaufenden Flächen ausgebildet sind.

4. Brüheinheit nach Anspruch 3,
**dadurch gekennzeichnet,**
**dass** die Rastausnehmungen (10) in einer senkrecht zur ersten Richtung (08) verlaufenden Breitenrichtung (B) im Randbereich des Trägers (09), bevorzugt angrenzend an eine Seitenwandung (25) des Trägers (09) angeordnet sind.

5. Brüheinheit nach einem der Ansprüche 3 oder 4,
**dadurch gekennzeichnet,**
**dass** die Verriegelungselemente (03) zum Erreichen der Verschlussstellung paarweise von innen nach oben und nach unten in die Rastausnehmungen (10) eingreifen.

6. Brüheinheit nach einem der Ansprüche 1 bis 5,
**dadurch gekennzeichnet,**
**dass** die Verriegelungselemente (03) so mit der beweglichen Brühkammerhälfte (02) verbunden sind, dass eine Bewegung der Brühkammerhälfte (02) in der ersten Richtung (08) eine entsprechende, bevorzugt translatorische, Bewegung der Verriegelungselemente (03) bewirkt.

7. Brüheinheit nach einem der Ansprüche 1 bis 6,
**dadurch gekennzeichnet,**
**dass** die Verriegelungselemente (03) über jeweils sich in Breitenrichtung (B) erstreckende, bevorzugt beidseitig vorgesehene, Achszapfen (04) schwenkbar mit einer gegenüber dem Träger (09) beweglich ausgebildeten Brühkammerhälfte (02) verbunden sind.

8. Brüheinheit nach einem der Ansprüche 1 bis 7,
**dadurch gekennzeichnet,**
**dass** die Steuerschieber in der ersten Richtung (08) beweglich gegenüber der beweglich gegenüber dem Träger (09) gelagerten Brühkammerhälfte (02) ausgebildet sind.

9. Brüheinheit nach einem der Ansprüche 1 bis 8,
**dadurch gekennzeichnet,**
**dass** die Steuerschieber als Steuerplatten (11) ausgebildet sind, deren Grundfläche (24) parallel zu Seitenwandungen (25) des Trägers (09) verlaufen.

10. Brüheinheit nach einem der Ansprüche 1 bis 9,
**dadurch gekennzeichnet,**
**dass** die konkave Grundfläche (26) der Steuerplatte (11) eine Nut (12) entlang der ersten Richtung (08) aufweist, die mit einem Führungssteg (13) auf einer konvexen Oberfläche (27) eines Innengehäuses (05) der beweglichen Brühkammerhälfte (02) im Eingriff ist.

11. Brüheinheit nach einem der Ansprüche 1 bis 10,
**dadurch gekennzeichnet,**
**dass** die Steuerplatte (11) einen in der ersten Richtung (08) verlaufenden Führungsdorn (22) aufweist, der beim Überführen der Verriegelungselemente (03) in die Verriegelungsstellung in eine gefederte Aufnahme (30) der Brühkammerhälfte (02) eingeführt wird.

12. Brüheinheit nach einem der Ansprüche 1 bis 11,
**dadurch gekennzeichnet,**
**dass** die Steuerschieber, insbesondere Steuerplatten (11), über außenliegende, insbesondere in Breitenrichtung (B) außenliegende, Antriebsbolzen (15) mit der Antriebseinrichtung (28) verbunden sind.

13. Brüheinheit nach Anspruch 12,
**dadurch gekennzeichnet,**
**dass** die Antriebsbolzen (15) sich auf beiden Seiten der Brüheinheit (01) durch Ausnehmungen (14) in dem Träger (09) erstrecken.

14. Brüheinheit nach Anspruch 12 oder 13,
**dadurch gekennzeichnet,**
**dass** die Antriebsbolzen (15) mit einer außerhalb des Trägers (09) angeordneten Antriebsgabel (16) der Antriebseinrichtung (28), insbesondere mit beidseitig an Seitenwandungen (25) des Trägers (09) entlang bewegbaren Gabelbeinen (19), verbunden sind.

15. Brüheinheit nach Anspruch 14,
**dadurch gekennzeichnet,**
**dass** die Antriebsgabel (16) eine die Gabelbeine (19) verbindende Rotationsachse (20) umfasst, die drehbar an dem Träger (09) angeordnet ist und bevorzugt mit Vorspannmitteln (21) in eine Rotationsrichtung (R) vorspannbar ist.

## Claims

1. A brewing unit (01) for a beverage preparation device for substrate portions, in particular for a coffee machine for pre-portioned coffee units, the brewing unit (01) comprising a carrier (09) and a brewing chamber, which has at least two brewing-chamber halves (02, 32) movable in relation to each other in a first direction (08), and a drive apparatus (28), by means of which at least one brewing-chamber half (02) is movable in relation to the carrier (09) so the brewing-chamber halves (02, 32) are transferable to at least an open position and a locked position, and a separate locking mechanism for locking the brewing-chamber halves (02, 32) in a locked position, the locking mechanism comprising four locking elements (03),
the locking elements (03) being movable, in particular pivotable, in pairs between a locked position and a released position via movable control valves each disposed between two locking elements (03),
**characterized in that** the control valves are designed as planoconcave control plates (11), the control valves having an exterior, plane base surface (24), which is disposed parallel to lateral walls (25) of the carrier (09), and having an opposite, interior, concave base surface (26), which is disposed so as to be movable with respect to a convex surface (27) of an interior casing (05) of a brewing-chamber half (02).

2. The brewing unit according to claim 1,
**characterized in that**
the locking elements (03) span a plane perpendicular to the first direction (08).

3. The brewing unit according to claim 1 or 2,
**characterized in that**
the carrier (09) has latching recesses (10) or latching indentations, which are formed in horizontal surfaces.

4. The brewing unit according to claim 3,
**characterized in that**
the latching recesses (10) are disposed in the edge area of the carrier (09), preferably abutting to a lateral wall (25) of the carrier (09) in a width direction (B) perpendicular to the first direction (08).

5. The brewing unit according to claim 3 or 4,
**characterized in that**
the locking elements (03) engage in the latching recesses (10) in pairs from the inside towards the top and towards the bottom for attaining the locked position.

6. The brewing unit according to any one of the claims 1 to 5,
**characterized in that**
the locking elements (03) are connected to the movable brewing-chamber halves (02) such that a movement of the brewing-chamber halves (02) causes a corresponding, preferably translational, movement of the locking elements (03) in the first direction (08).

7. The brewing unit according to any one of the claims 1 to 6,
**characterized in that**
the locking elements (03) are each connected to a brewing-chamber half (02), which is formed so as to be movable with respect to the carrier (09), in a pivotable manner via kingpins (04), which extend in the width direction (B) and are preferably provided on both sides.

8. The brewing unit according to any one of the claims claim 1 to 7,
**characterized in that**
the control valves are formed so as to be movable in the first direction (08) with respect to the brewing-chamber halves (02) mounted movable with respect to the carrier (09).

9. The brewing unit according to any one of the claims 1 to 8,
**characterized in that**
the control valves are designed as control plates (11), whose surface (24) extends parallel to lateral walls (25) of the carrier (09).

10. The brewing unit according to any one of the claims 1 to 9,
**characterized in that**
the concave base surface (26) of the control plate (11) has a groove (12) along the first direction (08), the groove (12) being engaged with a guide web (13) on a convex surface (27) of an interior casing (05) of the movable brewing-chamber half (02).

11. The brewing unit according to any one of the claims 1 to 10,
**characterized in that**
the control plate (11) has a guiding spike (22), which extends in the first direction (08) and is inserted in a spring-loaded reception (30) of the brewing-chamber half (02) when transferring the locking elements (03) to the locked position.

12. The brewing unit according to any one of the claims 1 to 11,
**characterized in that**
the control valves, in particular control plates (11), are connected to the drive apparatus (28) via external drive bolts (15), in particular external in the width direction (B).

13. The brewing unit according to claim 12,
**characterized in that**
the drive bolts (15) extend through recesses (14) in the carrier (09) on both sides of the brewing unit (01).

14. The brewing unit according to claim 12 or 13,
**characterized in that**
the drive bolts (15) are connected to a drive-shaft extractor (16) of the drive apparatus (28), in particular to extractor legs (19) movable along lateral walls (25) of the carrier (09) on both sides, the drive-shaft extractor (16) being disposed on the exterior of the carrier (09).

15. The brewing unit according to claim 14,
**characterized in that**
the drive-shaft extractor (16) comprises a rotation axis (20) which connects the extractor legs (19), is disposed on the carrier (09) so as to be rotational and preferably is pre-stressed in a rotation direction (R) using pre-stressing means (21).

## Revendications

1. Unité de percolation (01) pour un dispositif de préparation de boissons pour portions de substrat, notamment pour une machine à café pour unités de café pré-dosées, l'unité de percolation (01) comprenant un support (09) et une chambre de percolation qui a au moins deux moitiés (02, 32) de la chambre de percolation mobiles l'une par rapport à l'autre dans une première direction (08) et un appareil d'entraînement (28) au moyen duquel au moins une moitié (02) de la chambre de percolation est mobile par rapport au porteur (09) de telle sorte que les moitiés (02, 32) de la chambre de percolation sont transférables au moins dans une position ouverte et une position verrouillée, et un mécanisme de verrouillage séparé pour verrouiller les moitiés (02, 32) de la chambre de percolation dans une position verrouillée, le mécanisme de verrouillage comprenant quatre éléments de verrouillage (03),
les éléments de verrouillage (03) pouvant être bougés, notamment pivotés, par paires entre une position verrouillée et une position libérée par l'intermédiaire des vannes de dérivation mobiles disposées chacune entre deux éléments de verrouillage (03),
**caractérisée en ce que**
les vannes de dérivation sont conçues comme des plaques de guidage (11) plano-concaves, les vannes de dérivation ayant une surface de base (24) extérieure plane, qui est disposée parallèlement aux parois (25) latérales du support (09), et ayant une surface de base (26) opposée, intérieure, concave, qui est disposée de manière à être mobile par rapport à une surface (27) convexe d'un boîtier (05) intérieur d'une moitié (02) de la chambre de percolation.

2. Unité de percolation selon la revendication 1,
**caractérisée en ce que**
les éléments de verrouillage (03) s'étendent dans un plan perpendiculaire à la première direction (08).

3. Unité de percolation selon la revendication 1 ou la revendication 2,
**caractérisée en ce que**
le support (09) a des évidements d'encliquetage (10) ou des creux d'encliquetage, qui sont formés dans des surfaces horizontales.

4. Unité de percolation selon la revendication 3,
**caractérisée en ce que**
les évidements d'encliquetage (10) sont disposés dans la zone de bord du porteur (09), de préférence en butée contre une paroi (25) latérale du porteur (09) dans une direction de largeur (B) perpendiculaire à la première direction (08).

5. Unité de percolation selon la revendication 3 ou la revendication 4,
**caractérisée en ce que**
les éléments de verrouillage (03) s'engagent dans les évidements d'encliquetage (10) par paires depuis l'intérieur vers le haut et vers le bas pour atteindre la position verrouillée.

6. Unité de percolation selon l'une quelconque des revendications 1 à 5,
**caractérisée en ce que**
les éléments de verrouillage (03) sont reliés aux moitiés mobiles (02) de la chambre de percolation de telle sorte qu'un mouvement des moitiés (02) de la chambre de percolation provoque un mouvement correspondant, de préférence translatoire, des éléments de verrouillage (03) dans la première direction (08).

7. Unité de percolation selon l'une quelconque des revendications 1 à 6,
**caractérisée en ce que**
les éléments de verrouillage (03) sont chacun reliés à une moitié (02) de la chambre de percolation, qui est formée de manière à être mobile par rapport au support (09), de manière pivotante par l'intermédiaire des pivots (04), qui s'étendent dans la direction de la largeur (B) et sont de préférence prévus des deux côtés.

8. Unité de percolation selon l'une quelconque des revendications 1 à 7,
**caractérisée en ce que**
les vannes de dérivation sont formées de manière à être mobiles dans la première direction (08) par rapport aux moitiés (02) de la chambre de percolation montées mobiles par rapport au porteur (09).

9. Unité de percolation selon l'une quelconque des revendications 1 à 8,
**caractérisée en ce que**
les vannes de dérivation sont conçues comme des plaques de guidage (11), dont la surface (24) s'étend parallèlement aux parois (25) latérales du porteur (09).

10. Unité de percolation selon l'une quelconque des revendications 1 à 9,
**caractérisée en ce que**
la surface de base (26) concave de la plaque de guidage (11) a une rainure (12) le long de la première direction (08), la rainure (12) étant en prise avec une âme de guidage (13) sur une surface (27) convexe d'un boîtier (05) intérieur de la moitié mobile (32) de la chambre de percolation.

11. Unité de percolation selon l'une quelconque des revendications 1 à 10,
**caractérisée en ce que**
la plaque de guidage (11) a une broche de guidage (22) qui s'étend dans la première direction (08) et qui est insérée dans un logement (30) à ressort de la moitié (02) de la chambre de percolation lorsque les éléments de verrouillage (03) sont transférés dans la position verrouillée.

12. Unité de percolation selon l'une quelconque des revendications 1 à 11,
**caractérisée en ce que**
les vannes de dérivation, notamment des plaques de guidage (11), sont reliées à l'appareil d'entraînement (28) par des boulons d'entraînement (15) externes, notamment externes dans la direction de la largeur (B).

13. Unité de percolation selon la revendication 12,
**caractérisée en ce que**
les boulons d'entraînement (15) s'étendent à travers des évidements (14) dans le support (09) des deux côtés de l'unité de percolation (01).

14. Unité de percolation selon la revendication 12 ou la revendication 13,
**caractérisée en ce que**
les boulons d'entraînement (15) sont reliés à une fourchette (16) de l'appareil d'entraînement (28), notamment à des pieds de fourchette (19) mobiles le long de parois (25) latérales du porteur (09) des deux côtés, la fourchette (16) de l'appareil d'entraînement étant disposée à l'extérieur du porteur (09).

15. Unité de percolation selon la revendication 14,
**caractérisée en ce que**
la fourchette (16) de l'appareil d'entraînement comprend un axe de rotation (20) qui relie les pieds de fourchette (19), est disposée sur le porteur (09) de manière à pouvoir tourner et est de préférence précontrainte dans une direction de rotation (R) à l'aide de moyens de précontrainte (21).
